# EUROPÄISCHE PATENTSCHRIFT

(11) **EP 3 206 855 B1**
(45) Veröffentlichungstag und Bekanntmachung des Hinweises auf die Patenterteilung: **16.09.2020**
(21) Anmeldenummer: 15793701.2
(22) Anmeldetag: 16.10.2015
(51) Int. Cl.: B29C 49/46, B29C 49/58, B29C 49/06, B29C 49/12

(54) **ANORDNUNG ZUR ZUFÜHRUNG VON FÜLLGUT IN EINEN SICH AUS EINEM VORFORMLING AUSFORMENDEN BEHÄLTER IN EINER MASCHINE ZUM GLEICHZEITIGEN FORMEN UND FÜLLEN VON BEHÄLTERN AUS VORFORMLINGEN**
ARRANGEMENT FOR FEEDING CONTENTS INTO A CONTAINER BEING FORMED FROM A PREFORM, IN A MACHINE FOR SIMULTANEOUSLY MOULDING AND FILLING CONTAINERS MADE FROM PREFORMS
AGENCEMENT SERVANT À ACHEMINER UNE MATIÈRE DE REMPLISSAGE DANS UN CONTENANT FORMÉ À PARTIR D'UNE PRÉFORME DANS UNE MACHINE SERVANT SIMULTANÉMENT À FORMER ET À REMPLIR DES CONTENANTS À PARTIR DE PRÉFORMES

(30) Priorität: 16.10.2014 DE 102014015201
(43) Veröffentlichungstag der Anmeldung: 23.08.2017
(73) Patentinhaber: KHS Corpoplast GmbH, 22145 Hamburg (DE)
(72) Erfinder: Linke, Michael, 22159 Hamburg (DE); Baumgarte, Rolf, 22926 Ahrensburg (DE); Litzenberg, Michael, 21039 Börnsen (DE); Klöpper, Gerhard, 22391 Hamburg (DE); Meyer, Niels, 22869 Schenefeld (DE)
(74) Vertreter: Hausfeld, Norbert
(86) Internationale Anmeldenummer: PCT/EP2015/002048
(87) Internationale Veröffentlichungsnummer: WO 2016/058700

(56) Entgegenhaltungen:
- WO-A1-2013/063453
- WO-A2-2014/019691
- US-A1- 2011 135 778

## Beschreibung

Die vorliegende Erfindung betrifft eine Anordnung zur Zuführung von Füllgut in einen sich aus einem Vorformling ausformenden Behälter in einer Maschine zum gleichzeitigen Formen und Füllen von Behältern aus Vorformlingen, wobei die Anordnung durch ihre Wandung einen Strömungsweg zwischen einer Füllgutzuleitung und der Behältermündung definiert.

Herkömmlich werden Behälter, insbesondere Flaschen, im Blasformverfahren durch ein unter Druck in einen vorgeheizten Vorformling einströmendes Formgas geformt und in einem zweiten Schritt mit einem Füllgut, insbesondere einem flüssigen Füllgut, befüllt. Zur rationelleren Herstellung sind in letzter Zeit Verfahren entwickelt worden, bei denen der vorgeheizte Vorformling nicht durch ein Druckgas sondern durch das unter Durck zugeführte flüssige Füllgut in einem Schritt geformt und gefüllt werden können. Ein solches Verfahren ist z.B. aus der DE 10 2010 007 541 A1 bekannt.

Damit der Vorformling in einen Behälter umgeformt werden kann, besteht er aus einem thermoplastischen Material und wird thermisch konditioniert, also insbesondere erwärmt. Dabei wird der Körper des Vorformlings z.B. auf ca. 120 °C erwärmt und formbar, während der Mündungsbereich nur deutlich niedrigere Temperaturen erreichen darf, da der Vorformling am Mündungsbereich in der Form- und Füllmaschine gehalten wird und sich unter den dort üblichen Haltekräften nicht verformen darf.

Die Glastemperatur der üblicherweise verwendeten thermoplastischen Materialien, oberhalb der sich das Material rissfrei verformen lässt, liegt bei ca. 70 °C. Diese Temperatur darf während der ganzen Umformung nicht unterschritten werden. Wegen der hohen Wärmekapazität der abzufüllenden Flüssigkeiten im Vergleich zu den bei der Blasformung verwendeten Formgasen verliert der Vorformling schnell an Temperatur. Bei der Abfüllung von kalten Flüssigkeiten, wie z.B. von Wasser, steht für den Form- und Füllvorgang eine Prozesszeit von ca. 300 ms zur Verfügung.

Es ist deshalb wichtig, die unter Druck in den sich formenden Behälter einströmende Flüssigkeit mit einer hohen Durchflussrate einströmen zu lassen. Dabei ist die Behältermündung der engste Bereich. Ein Rückstau, der zu hohen Staudrücken führen kann, soll vermieden werden.

Bei hohen Drücken besteht auch die Gefahr der Verformung des Mündungsbereichs des Behälters. Die Temperatur des Vorformlings unmittelbar unterhalb des Mündungsbereichs sollte möglichst deutlich überhalb der Glastemperatur des verwendeten Materials liegen, damit der Behälter ausgeformt werden kann. Durch die größere Wärmeabführung durch das flüssige Füllgut, insbesondere bei Kaltfüllung, ist ein erheblicher Temperaturverlust während der Formung anzunehmen, so dass die Ausgangstemperatur entsprechend hoch anzusetzen ist. Durch dynamische Effekte kann der Staudruck temporär deutlich höher als der Fülldruck sein, so dass das Risiko einer Verformung des Mündungsbereichs besteht.

Meist wird die Querschnittsfläche der Flaschenmündung noch zusätzlich durch eine Reckstange eingeschränkt, die um die Achse des Vorformlings herum in den Vorformling und den sich ausformenden Behälter eintaucht und das axiale Strecken unterstützt. So entsteht ein Ringspalt im Bereich der Mündung.

Das flüssige Füllgut wird aus einem Vorratstank unter Druck durch eine Zuleitung zugeführt. Durch die Reckstange wird eine direkte Zuführung zur Behältermündung verhindert. In diesem Fall ist zusätzlich eine Umlenkung des Füllgutstroms ist erforderlich, wobei Turbulenzen oder ein Rückstau verhindert oder deren Auswirkungen vermindert werden sollten

Die Druckschriften WO 2014/019691, WO 2013/063453 und US 2011/135778 beschreiben eine Anordnung gemäß dem Anspruch 1.

Die Aufgabe der Erfindung ist es, eine Anordnung zur Zuführung von Füllgut aus einer Zuführleitung in einen sich aus einem Vorformling ausformenden Behälter in einer Maschine zum gleichzeitigen Formen und Füllen von Behältern aus Vorformlingen vorzuschlagen, die Turbulenzen und Staudruck möglichst gering hält oder deren Auswirkungen vermindert.

Zur Lösung der Aufgabe wird eine Anordnung gemäß Anspruch 1 zur Zuführung von Füllgut in einen sich in einer Form aus einem Vorformling ausformenden Behälter in einer Maschine zum gleichzeitigen Formen und Füllen von Behältern aus Vorformlingen vorgeschlagen, wobei die Anordnung durch ihre Wandung einen Strömungsweg zwischen einer Füllgutzuleitung und der Behältermündung definiert. Die Anordnung weist einen dichtenden Abschluss sowohl zur Füllgutzuleitung als auch zum Vorformling auf. Für die Zufuhr von Füllgut wird übliche, standardmäßig verwendete Technologie eingesetzt, die mit den erforderlichen Drücken arbeiten muss, aber ansonsten nicht weiter auf die Form des zu formenden und zu füllenden Behälters abgestimmt werden muss. Die Form und der verwendete Vorformling sind behälterspezifisch. Schnittstelle ist die Mündung des Vorformlings. Die erfindungsgemäße Anordnung definiert den Strömungsweg zwischen der Füllgutzuleitung und der Mündung des Vorformlings bzw. des sich formenden Behälters und kann individuell angepasst werden.

Die Anordnung kann insbesondere einen dichtenden Abschluss zur Mündung des Vorformlings oder zwischen der Anordnung und der Außenseite des Vorformlings, vorzugsweise im unteren Mündungsbereich, oder zwischen der Anordnung und der Form erreichen.

Gemäß einer vorteilhaften Ausgestaltung der Erfindung kann der Durchmesser der Anordnung in der Richtung auf die Behältermündung zwischem einem ersten zur Achse des Vorformlings im Wesentlichen parallelen Wandungsbereich und einem zweiten zur Achse des Vorformlings parallelen Wandungsbereichabnehmen, der Übergang zwischen der Zuleitung und der Anordnung tangential zu einer Wandung der Anordnung erfolgen und der Übergang zwischen der Wandung der Anordnung und der Behältermündung kantenfrei und achsparallel zur Achse des Vorformlingserfolgen.

Diese erfindungsgemäße Anordnung ermöglicht die turbulenz- und staudruckarme Umlenkung eines aus einer Zuführleitung zugeführten Füllgutstroms auch bei hohem Volumenstrom. Die Anordnung umfasst einen Bereich mit einem größeren Durchmesser und verringert ihren Durchmesser prinzipiell trichterförmig in Richtung auf die Behältermündung. Der Übergang zwischen der Zuleitung und der Anordnung soll tangential zu einer Wandung der Anordnung erfolgen. Dadurch wird der Füllgutstrom sanft umgelenkt und es entstehen keine Verwirbelungen, die einen Rückstau verursachen könnten.

Durch den sich in Richtung auf die Behältermündung stetig verringernden Durchmesser kann sich die Strömung an die Wandung der Anordnung anlegen und der Füllgutstrom kontinuierulich in Richtung auf den Bereich mit kleinstem Querschnitt in Bereich der Mündung Geschwindigkeit aufnehmen.

Der Übergang zwischen der Wandung der Anordnung und der Behältermündung soll kantenfrei und achsparallel zur Achse des Vorformlings erfolgen, so dass keine Verwirbelungen am Übergang auftreten oder die Strömung sich von der Wandung ablöst und den effektiv verfügbaren Querschnitt der Mündung verringert.

Die Zuführleitung kann sowohl etwa rechtwinklig als auch parallel oder in einem anderen Winkel zur Achse des Vorformlings stehen, so dass sowohl eine im Wesentlichen horizontale als auch eine im Wesentichen vertikale Zuführung des Füllguts möglich ist.

Vorzugsweise ist die Zuführleitung bei einem etwa vertikal ausgerichteten Vorformling leicht nach unten geneigt, so dass die tangential in die Zuführanordnung eingeleitete Zuführleitung eine leicht nach unten in Richtung auf den Vorformling gerichtete Strömung verursacht.

Die Querschnittsfläche der Anordnung kann um die Achse des Vorformlings herum begrenzt sein, insbesondere kreisförmig, wie es sich z.B. durch eine Reckstange ergibt. Dadurch entsteht ein Ringspalt mit einer ringförmigen Fläche.

Der sich in Richtung auf die Behältermündung hin verringernde Durchmesser der Anordnung kann sich insbesondere in einer ersten konkaven Krümmung und in einer zweiten konvexen Krümmung in Richtung der Behältermündung verkleinern, wobei konkav und konvex hier in Bezug auf den strömungsführenden Bereich der Anordnung zu verstehen ist.

Die Krümmungsradien sollen dabei insbesondere so gewählt sein, dass keine Kanten entstehen und es somit nicht zu Strömungsabrissen kommen kann.

Die Tangente der strömungsleitenden Wandung kann vorzugsweise an ihrem flachsten Abschnitt einen Winkel von unter 60° zur Achse des Vorformlings und insbesondere von unter 45° zur Achse des Vorformlings bilden.

Die Krümmungsradien der Krümmungen können gemäß einer Ausführungsform größer als die halbe Höhe der Anordnung und/oder größer als ein Viertel ihrer Durchmesserreduzierung sein.

Die Wandung der Vorrichtung kann gemäß einer weiteren Ausführungsform der Erfindung durch eine stömungsleitende Spiralkontur überlagert sein.

Gemäß einem Ausführungsbeispiel kann die Anordnung über eine Reckstange mit strömungsleitenden Konturen verfügen, insbesondere mit einer Spiral- oder einer Wendelkontur. Dadurch kann eine Kreisströmung im Bereich des Ringspalts der Behältermündung unterstützt werden.

Die Anordnung kann gemäß einer Ausführungsform dichtend an der Mündung des Vorformlings bzw. an der Mündung des Behälters anliegen. Alternativ kann die Anordnung nach außen auch gegenüber einem Bauteil der Maschine dichtend abschließen, insbesondere gegenüber der Form, aber auch gegenüber der Halterung des Vorformlings oder jedem anderen geeigneten Teil. Erfolgt kein dichtender Abschluss an der Mündung, so wird die Mündung von außen und innen von unter Druck stehendem Füllgut umspült und es wird im Mündungsbereich kein Innendruck aufgebaut, der zu einer Verformung der Mündung führen kann. Außerdem kann die beidseitige Umspülung der Mündung zu einer schnelleren Abkühlung dieses Bereichs, der nicht verformt werden soll, führen, so dass es nicht zu einer unbeabsichtigten Verformung z.B. eines Gewindes auf der Behältermündung kommt.

Gemäß einer bevorzugten Ausführungsform der Erfindung kann die Anordnung die Behältermündung zumindest teilweise und vorzugsweise ganz außenseitig umschließen. Vorzugsweise kann sie die Behältermündung von außen gegen radiale Kräfte abstützen. In letzterem Fall kann eine Verformung des Mündungsbereichs durch von innen wirkende Druckkräfte verhindert werden, wenn die Dichtung zwischen der Anordnung und der Behältermündung an der Mündung selbst erfolgt. Erfolgt die Dichtung zur Form oder einem anderen Maschinenbauteil oder zur Außenseite der Mündung im unteren Bereich der Mündung, so erfolgt ein Druckausgleich zwischen Außen- und Innenseite der Mündung und es tritt keine Verformung durch Durckkräfte ein.

Oft sind die Behältermündungen mit Schraubgewinden versehen. In diesem Fall kann die Anordnung oder ein Teil davon mit der Mündung verschraubbar sein. Die Form dieses Teil der Anordnung kann dann komplementär zum Gewinde ausgebildet sein und das Gewinde sicher gegen Verformung schützen. Zur Vereinfachung des Aufbaus der Form- und Füllstation kann die Anordnung in diesem Fall mindestens zweiteilig aufgebaut sein. Die Teile können dann dichtend miteinander verbunden werden. Der oder die auf die Mündung aufschraubbare Teil kann dann durch Rotation mit der Mündung verbunden werden, während der oder die weiteren Teile rotationsfest mit der Form- und Füllstation verbunden sein können.

Der oder die auf die Mündung aufschraubbaren Teile können vorteilhaft wie eine Kappe mit der oberen Kante der Mündung abdichten, wofür in diesen Bauteilen ein Absatz vorgesehen sein kann, der in der Endposition der Teile in Anlage mit der Oberkante der Mündung gerät. Unabhängig von der Art der Dichtung sollten alle Bauteile vorteilhafterweise so ausgeführt sein, dass in allen den Strömungsweg begrenzenden Flächen Vorsprünge oder Vertiefungen vermieden werden, um eine laminare bzw. turbulenzarme Strömung des Füllguts zu begünstigen.

In einen Verfahren zur Formung und Füllung von Behältern aus Vorformlingen kann der mit der Behältermündung verbundene Teil der Anordnung auch aus einem Bauteil bestehten, das während mehrerer Prozessschritte mit der Mündung verbunden bleibt und jeweils ein neues Teil mit jedem der Maschine zugeführten Vorformling verwendet wird.

Die Erfindung wird im Folgenden anhand der beigefügten Abbildungen näher erläutert, die Folgendes darstellen:
- Fig. 1: zeigt schematisch eine erste Ausführungsform einer erfindungsgemäßen Anordnung zur Zuführung von Füllgut im Schnitt;
- Fig. 2: zeigt schematisch eine weitere Ausführungsform einer erfindungsgemäßen Anordnung zur Zuführung von Füllgut im Schnitt;
- Fig. 3: zeigt die Anordnung aus Figur 2 in Draufsicht von oben;
- Fig. 4: zeigt rechts und links der Symmetrieebene unterschiedliche Ausführungsbeispiele einer erfindungsgemäßen Anordnung zur Zuführung von Füllgut im Schnitt;
- Fig. 5: zeigt ein weiteres Ausführungsbeispiel einer erfindungsgemäßen Anordnung zur Zuführung von Füllgut im Schnitt;
- Fig. 6a und 6b: zeigen noch ein weiteres Ausführungsbeispiel einer erfindungsgemäßen Anordnung im Schnitt und in Draufsicht von oben;
- Fig. 7: zeigt ein Ausführungsbeispiel wie in Figur 2 aber mit anderem Anschluss an die Mündung des Vorformlings;
- Fig. 8: zeigt ein Ausführungsbeispiel mit vertikaler Zuführung des Füllguts;
- Fig. 9: zeigt ein Ausführungsbeispiel eines Anschlusses der Anordnung an die Mündung des Vorformlings;
- Fig. 10: zeigt ein weiteres Ausführungsbeispiel eines Anschlusses der Anordnung an die Mündung des Vorformlings;
- Fig. 11: zeigt ein Ausführungsbeispiel eines verschraubrten Anschlusses der Anordnung an die Mündung des Vorformlings.

Es versteht sich für den Fachmann von selbst, dass die hier dargestellten Zeichnungen lediglich zur Veranschaulichung des Prinzips der Erfindung dienen sollen und nur schematisch und nicht maßstabsgerecht wiedergegeben sind. Insbesondere dienen die Größenverhältnisse zwischen Vorformling, ausgeformtem Behälter und der erfindungsgemäßen Anordnung nur der Veranschaulichung. Die tatsächlichen Größenverhältnisse kann der Fachmann frei aufgrund seiner Fachkenntnisse bestimmen.

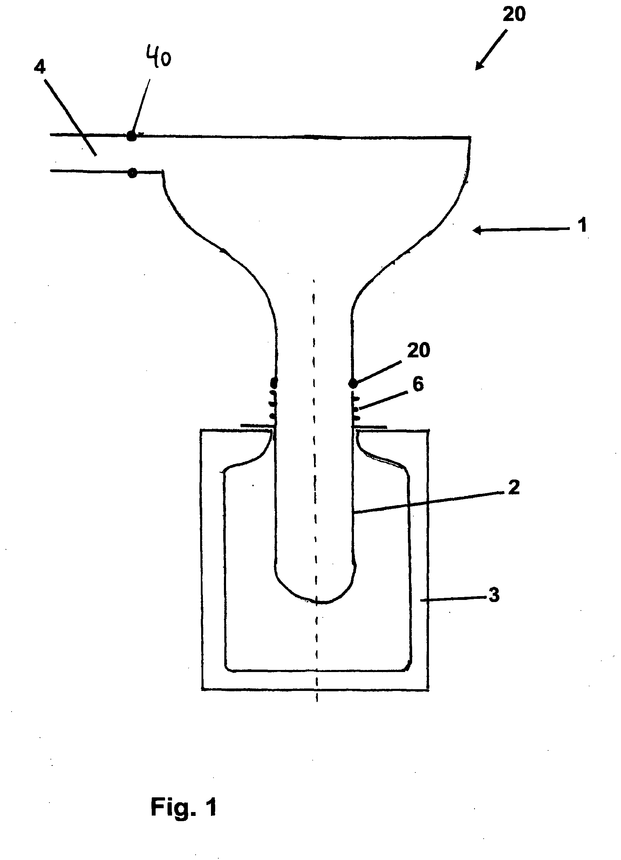

Figur 1 zeigt schematisch ein Ausführungsbeispiel einer erfindungsgemäßen Anordnung 1 zur Zuführung von Füllgut. Zu sehen ist ein Vorformling 2, der in eine Form 3 einer Form- und Füllstation einer Abfüllmaschine eingebracht ist. Der Vorformling 2 besteht aus einem thermoplastischen Material und ist thermisch konditioniert, d.h. er ist soweit erhitzt, dass er plastisch verformt werden kann. Die Formung soll in einem Arbeitsgang mit der Füllung durch unter Durck in den Vorformling einströmendes Füllgut geschehen.

Hierzu wird aus einer Zuleitung 4 Füllgut unter hohem Druck bereitgestellt und in den Vorformling 2 eingeleitet. Die Füllgutzuleitung 4 wird maschinenseitig bereitgestellt. Die individuelle Form 3 und der individuelle Vorformling unterscheiden sich aber von Behälter zu Behälter. Um eine leichte Anpassung auf verschiedene Behälter zu ermöglichen, ist zwischen der Füllgutzuleitung 4 und der Behältermündung 6 eine Anordung 1 zur Zuführung von Füllgut vorgesehen, mit der eine Anpassung zwischen der Maschine und der Behältermündung erreicht und individuell an die zu erwartenden Strömungsverhältnisse angepasst werden kann. Die Füllgutzuleitung 4 weist hierfür einen dichtenden Anschluss 40 an die Anordnung 1 auf, die wiederum dichtend, hier mit Dichtung 20, mit der Mündung 6 des Vorformlings 3 verbunden werden kann.

Der Durchmesser der Anordnung kann sich in Richtung auf die Mündung des Vorformlings verringern, wobei die Verringerung vorzugsweise in Trichterform erfolgen kann. Dies kann durch einen üblichen Trichter mit geraden Wänden erfolgen, wobei dann Kanten am Übergäng zwischen dem Becher des Trichters und den geraden Wänden entstehen. Um auch in diesen Bereichen Turbulenzen zu vermeiden wird besonders bevorzugt ein Trichter mit weichen Übergängen, also mit größeren Radien im Bereich der Übergänge gewählt.

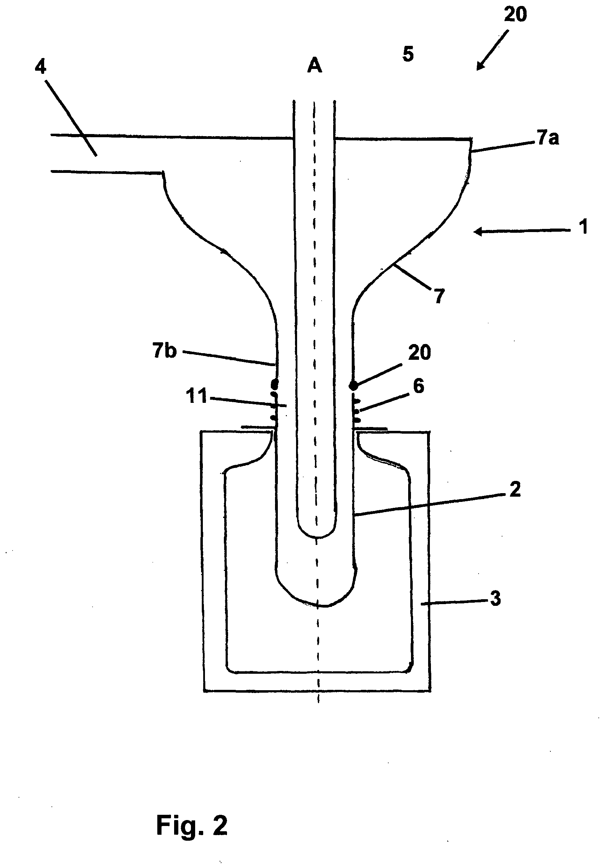

In Figur 2 ist schematisch ein Ausführungsbeispiel einer erfindungsgemäßen Anordnung 1 zur Zuführung von Füllgut dargestellt. Zu sehen ist ein Vorformling 2, der in eine Form 3 einer Form- und Füllstation einer Abfüllmaschine eingebracht ist. Der Vorformling 2 besteht aus einem thermoplastischen Material und ist thermisch konditioniert, d.h. er ist soweit erhitzt, dass er plastisch verformt werden kann. Die Formung soll in einem Arbeitsgang mit der Füllung durch unter Durck in den Vorformling einströmendes Füllgut geschehen.

Hierzu wird aus einer Zuleitung 4 Füllgut unter hohem Druck bereitgestellt und in den Vorformling 2 eingeleitet. Für die Ausformung des Behälters, hier einer Flasche, aus dem Vorformling 2 muss letzterer in axialer und in radialer Richtung gestreckt werden. Um das Strecken in axialer Richtung zu unterstützen, ist eine Reckstange 5 zentral entlang der Achse A des Vorformlings 2 vorgesehen. Der für die Zufuhr mit Füllgut zur Verfügung stehende Querschnitt 11 im Bereich der Flaschenmündung 6 ist deshalb ringförmig.

Das aus der Zuleitung 4 zuströmende Füllgut kann wegen der Reckstange 5 nicht direkt in axialer Richtung 4 des Vorformlings 2 zugeführt werden und muss umgeleitet werden. Dies geschieht turbulenz- und staudruckarm mittels der erfindungsgemäßen Anordnung 1, von der ein Ausführungsbeispiel hier dargestellt ist.

Die Anordnung 1 definiert mit ihrer Wandung 7 einen Strömungsweg, wobei der Durchmesser der Anordnung in der Richtung auf die Behältermündung 6 zwischen einem ersten zur Achse des Vorformlings im Wesentlichen parallelen Bereich 7a und einem zweiten zur Achse des Vorformlings parallelen Bereich 7b stetig abnimmt. Der Bereich dazwischen ist prinzipiell trichterförmig, wobei scharfe Kanten und alles, was Strömungsabrisse verusachen kann, vermieden wurden.

Das Füllgut wird etwa horizontal aus der Füllgutzuleitung 4 zugeführt. Dabei soll der Übergang zwischen der Zuleitung 4 und der erfindungsgemäßen Anordnung 1 im Wesentlichen tangential erfolgen, um Verwirbelungen zu vermeinden.

Der Übergang zwischen der Wandung 7b der Anordnung und der Behältermündung 6 erfolgt kantenfrei und achsparallel zur Achse A des Vorformlings. Zwischen der Anordnung und der Behältermündung 6 ist in diesem Ausführungsbeispiel eine Dichtung 20 vorgesehen.

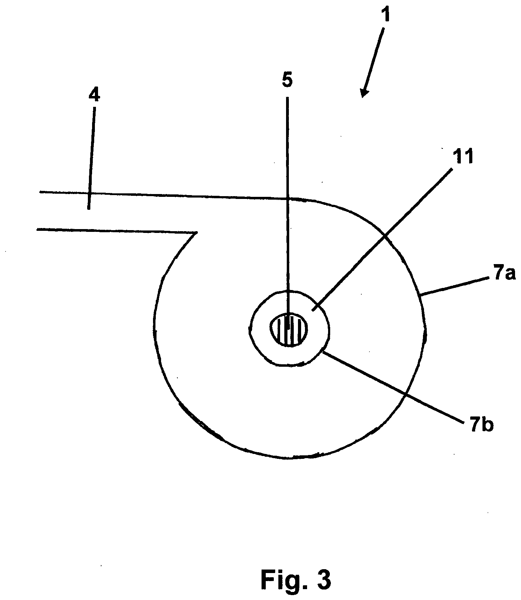

Die in Figur 2 im Schnitt dargestellte Anordung ist in Figur 3 in Draufsicht von oben dargestellt. Die Füllgutzufuhr 4 erfolgt im Bereich der Wandung 7a der Anordnung im Wesentlichen tangential. Das Füllgut wird strudelartig nach unten in Richtung des durch die Reckstange 5 und den kleineren Durchmesser der Wandung 7b der Anordnung gebildeten Ringspalt 11 geleitet und kann turbulenz- und staudruckarm in den Vorformling bzw. in den sich daraus formenden Behälter einströmen.

Die mit der erfindungsgemäßen Anordnung zu erreichenden hohen Volumenströme ermöglichen es, kurze Prozesszeiten einzuhalten, innerhalb derer der thermisch konditionierte Vorformling warm genug ist, um verformt zu werden. Durch die laminare Strömung, die sich auch im Vorformling bzw. im sich ausformenden Behälter einstellt, und bei der es zu wenig Vermischung zwischen den Strömungsschichten kommt, kühlt der sich formende Behälter auch weniger schnell aus als bei turbulenteren Strömungen, so dass die Prozesszeit bis der Vorformling seine Glastemperatur erreicht hat und nicht mehr formbar ist, verlängert wird.

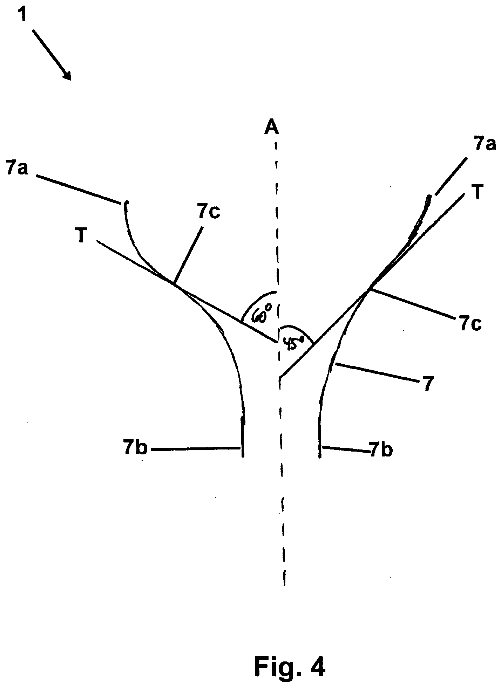

Figur 4 zeigt schematisch den vorzugsweisen Verlauf der Wandung 7 von zwei erfindungsgemäßen Anordnungen in Bezug auf die Achse A des Vorformlings. Die Wandung 7 der Anordnung verläuft ausgehend vom ersten zur Achse des Vorformlings im Wesentlichen parallen Bereich 7a zunächst mit einer von dem strömungsführenden Bereich aus gesehen konkaven Krümmung nach innen, woran sich eine konvexe Krümmung anschließt, mit der die Wandung in einen zweiten zur Achse des Vorformlings parallen Bereich 7b übergeht. Rechts und links der Achse A sind verschiedene Ausführungsbeispiele gezeigt, bei denen die Tangente T an der flachsten Stelle 7c, hier beim Übergang zwischen der konkaven und der konvexen Krümmung, einen Winkel zur Achse des Vorformlings von 60° bzw. 45° beträgt.

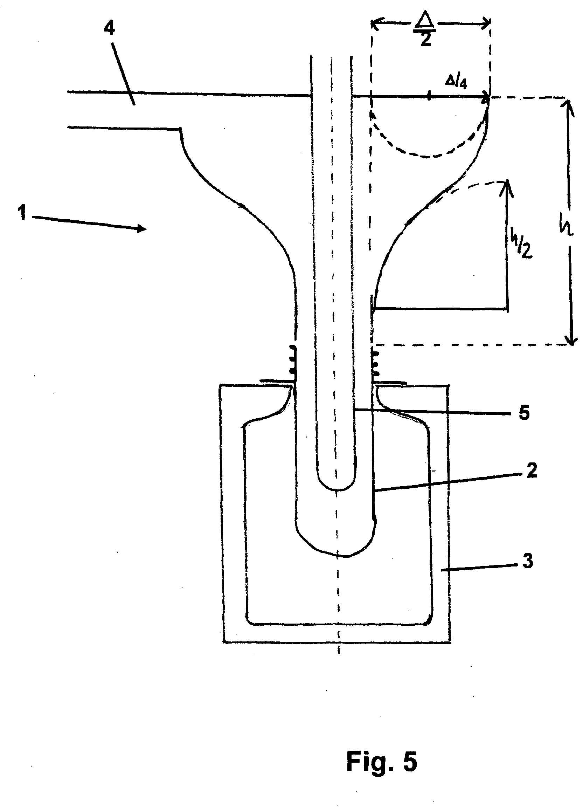

Figur 5 zeigt im Schnitt eine erfindungsgemäße Anordnung, die eine Höhe h und eine Durchmesserreduktion Δ aufweist. Es ist dargestellt, dass die Krümmungsradien der Krümmungen größer als die halbe Höhe h der Anordnung oder größer als ein Viertel ihrer Durchmesserreduzierung Δ sind.

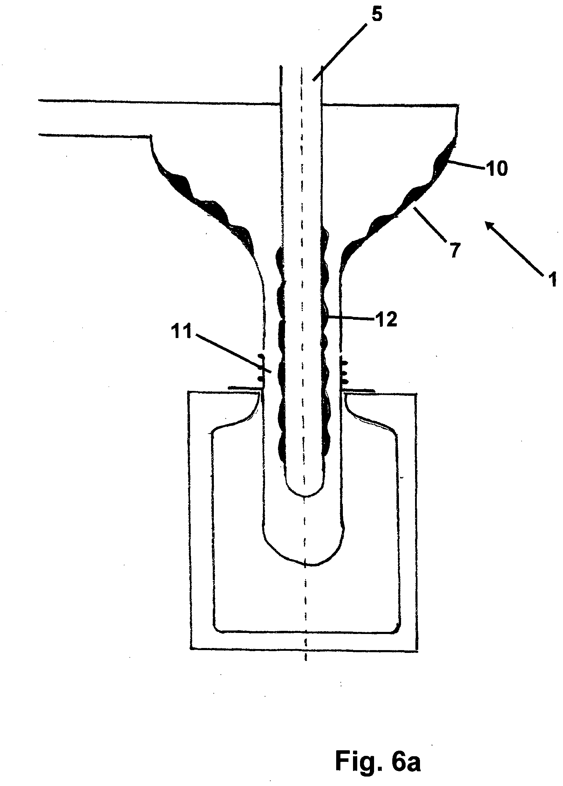

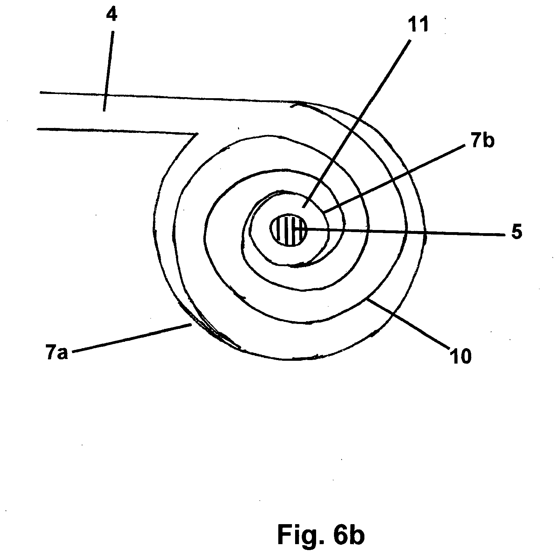

In den Figuren 6a und 6b ist ein weiteres Ausführungsbeispiel dargestellt, bei dem die Wandung 7 der Anordnung durch eine stömungsleitende Sprialkontur 10 überlagert ist. Die Kontur unterstützt die Füllgutströmung spiralförmig nach unten im Sinne eines Strudels und erleichtert hohe Füllgutströme im Bereich des Ringspalts 11. Die Drehbewegung des Füllgutstroms kann zusätzlich durch eine enstprechend gefomte Reckstange 5, z.B. mit Wendeln 12, wie in Figur 5a angedeutet, unterstützt werden.

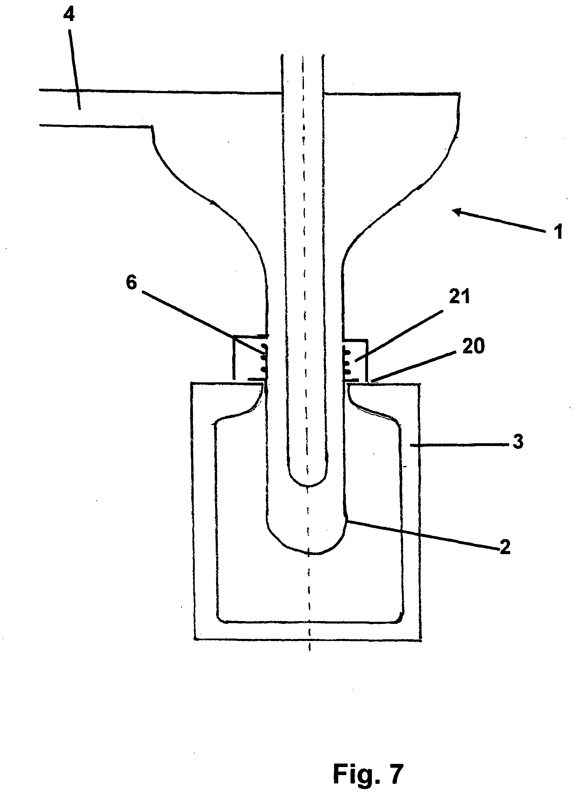

Figur 7 zeigt ein Ausführungsbeispiel der erfindungsgemäßen Anordnung 1, das prinzipiell dem in Figur 1 dargestellten Ausführungsbeispiel entspricht. Abweichend davon erfolgt die Abdichtung 20 der Anordnung nicht gegenüber der Mündung 6 des Vorformlings 2 wie in Figur 1 sondern gegenüber der Form 3. Zwischen dem unteren Ende der Anordnung und der Mündung 6 des Vorformlings 2 ist keine Dichtung vorgesehen, so dass Füllgut in den mit 21 bezeichneten Bereich der Anordnung um die Mündung 6 herum fließen kann. Dadurch wird weder Kraft auf die Mündung zur Abdichtung aufgebaut, noch wird im Bereich der Mündung 6 Innendruck aufgebaut, der die Mündung 6 verformen könnte. Durch das Füllgut auf der Außenseite 21 der Mündung wird allseitig der gleiche Druck aufgebaut und die Mündung 6 wird, selbst wenn sie durch die thermische Konditionierung des Vorformlings 2 erwärmt ist, nicht verformt.

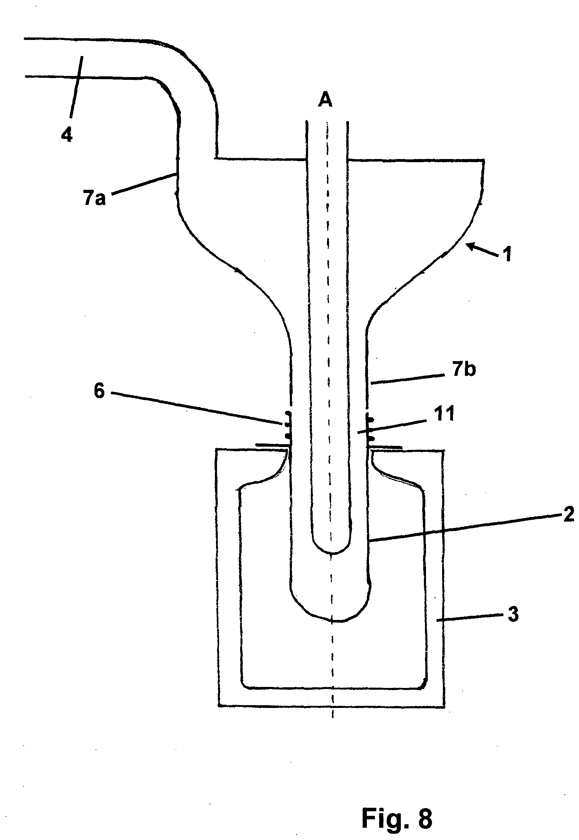

Figur 8 zeigt eine Anordnung, bei der die Füllgutzufuhr 4 in vertikaler Richtung erfolgt. Wiederum erfolgt der Übergang zwischen der Zuleitung 4 und der Anordnung tangential zur Wandung 7a der Anordnung. Der Füllgutstrom wird sanft umgelenkt, um möglichst turbulenzarm durch den Ringspalt 11 zu strömen.

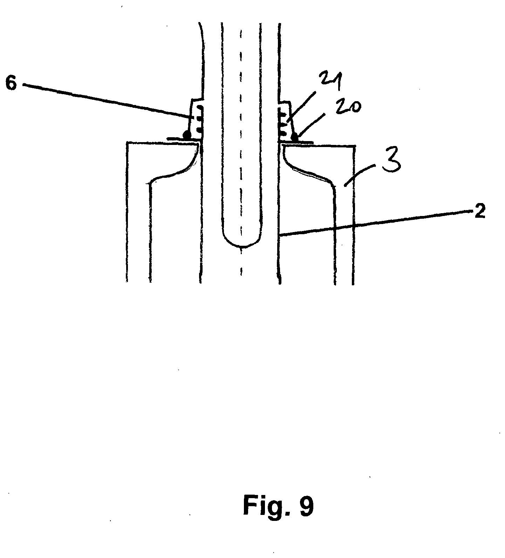

Figur 9 zeigt im Ausschnitt ein Ausführungsbeispiel eines Übergangs zwischen einer einer erfindungsgemäßen Anordnung ähnlich wie in Figur 7 und der Mündung des Vorformlings 6. Abweichend davon erfolgt die Abdichtung 20 der Anordnung nicht gegenüber der Form 3 sondern gegenüber dem Außenbereich der Mündung 6 des Vorformlings 2. Zwischen dem unteren Ende der Anordnung und der Mündung 6 des Vorformlings 2 ist keine Dichtung vorgesehen, so dass Füllgut in den mit 21 bezeichneten Bereich der Anordnung um die Mündung 6 herum fließen kann. Dadurch wird weder Kraft auf die Mündung zur Abdichtung aufgebaut, noch wird im Bereich der Mündung 6 Innendruck aufgebaut, der die Mündung 6 verformen könnte. Durch das Füllgut auf der Außenseite 21 der Mündung wird allseitig der gleiche Druck aufgebaut und die Mündung 6 wird, selbst wenn sie durch die thermische Konditionierung des Vorformlings 2 erwärmt ist, nicht verformt.

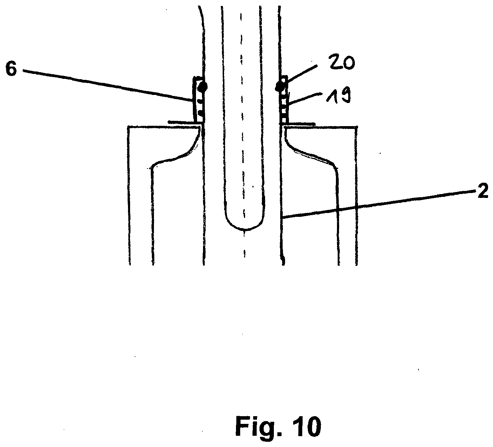

Figur 10 zeigt im Ausschnitt ein Ausführungsbeispiel eines Übergangs zwischen einer erfindungsgemäßen Anordnung und der Mündung des Vorformlings 6, bei der die Anordnung die Mündung 6 des Vorformlings 2 außenseitig umschließt. Die Abdichtung zwischen der Anordnung und dem Vorformling 2 erfolgt durch eine Dichtung 20 an der Mündung. Der die Mündung 6 umschließende Bereich 19 der Anordnung stützt den Mündungsbereich 6 nach außen gegen radial nach außen wirkende Kräfte. Treten im Inneren des Mündungsbereichs 6 durch die Formung und Füllung des Behälters hohe Drücke auf, die den Mündungsbereich 6 verformen könnten, so werden diese Kräfte duch den den Mündungsbereich 6 umschließenden Bereich 19 kompensiert und die Mündung wird nicht verformt.

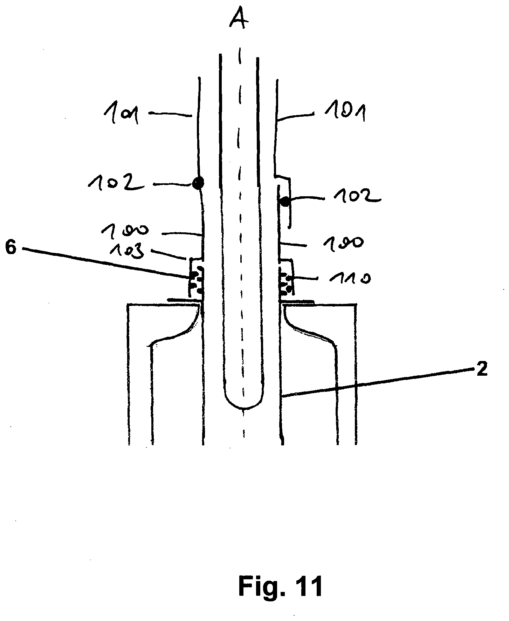

In dem in Figur 11 dargestellten Ausführungsbeispiel wird der Teil 100 der Anordnung mit der Behältermündung 6 verschraubt. Hierfür sind Gewindegänge 110 an der Innenseite des die Behältermündung umschließenden Bereichs des Teils 100 der Anordnung vorgesehen.

Der auf die Mündung aufschraubbare Teil 100 dichtet wie eine Kappe mit der oberen Kante der Mündung 6 ab, wofür in diesem Teil 100 ein Absatz 103 vorgesehen ist, der in der Endposition des Teils 100 in Anlage mit der Oberkante der Mündung 6 gerät. Kanten und Vorsprünge im Stömungsweg werden durch entsprechende Gestaltung des Teils 100 vermieden, um eine laminare bzw. turbulenzarme Strömung des Füllguts zu begünstigen.

Für die Verschraubung mit der Mündung 6 ist die Anordnung mindestens zweistückig vorgesehen, so dass neben dem Teil 100 noch Teil 101 vorgesehen ist, das rotationsfest mit der Maschine bzw. mit der Form- und Füllstation verbunden ist und mittels Dichtung 102 dichtend mit dem Teil 100 verbunden werden kann. Rechts und links der Symmetrieachse A sind in dieser Figur unterschiedliche Möglichkeiten der Abdichtung zwischen den beiden Teilen 100 und 101 dargestellt. Links erfolgt die Abdichtung durch die Dichtung 102 axial. Sie kann aber auch, wie rechts in der Figur dargestellt, radial erfolgen, wenn der untere Bereich des Teils 101 über das Teil 100 greifen kann. Es versteht sich für die Fachmann von selbst, dass auch die umgekehrte, hier nicht abgebildete Lösung, dass untere Bereich des Teils 101 in das Teil 100 eingeschoben werden kann, bzw. dass das Teil 100 von unten über das Teil 101 greifen kann, möglich ist.

Teil 100 der Anordnung kann bei dieser Ausgestaltung auch beispielsweise vor der Form- und Füllphase mit dem Rohling verbunden werden. In der Form- und Füllphase wird der zweite Teil 101 dichtend mit dem ersten Teil 100 verbunden und der Behälter wird geformt und gefüllt. Nach vollständiger Formung und Füllung wird Teil 101 wieder getrennt, während Teil 100 noch auf dem geformten Behälter verbleibt. Der über die Mündung 6 herausstehende Bereich dient dann beim Weitertransport des gefüllten Behälters innerhalb der Abfüllmaschine als Überschwappschutz, so dass hohe Umlaufgeschwindigkeiten der Maschine erreichte werden können, ohne dass Füllgut aus dem Behälter herausschwappen kann.

Das auf die Mündung 6 aufschraubbare Teil 100 kann wiederverwendbar sein. Die Maschine kann hierfür über eine Rückführung derartiger Teile verfügen, die dann vorzugsweise vor dem Wiederverwenden gereinigt und/oder sterilisiert werden.

Teil 100 kann auch ein Einwegteil sein, dass nach Verwendung entweder recycelt wird oder auf der Behältermündung verbleiben und durch Umformen als Kappe verwendet werden kann. Hierzu kann das Teil insbesondere durch Thermoformung umgeformt werden. Vorzugsweise wird das Teil vor Verwendung bzw. vor dem Aufsetzen auf die Mündung des Vorformlings gereinigt und/oder sterilisiert.

## Patentansprüche

1. Anordnung (1) zur Zuführung von Füllgut in einen sich in einer Form (3) aus einem Vorformling (2) ausformenden Behälter in einer Maschine zum gleichzeitigen Formen und Füllen von Behältern aus Vorformlingen, wobei die Anordnung durch ihre Wandung (7) einen Strömungsweg zwischen einer Füllgutzuleitung (4) und der Behältermündung (6) definiert, **dadurch gekennzeichnet, dass** die Anordnung einen dichtenden Abschluss (40,20) zwischen der Füllgutzuleitung und der Anordnung (1) sowie zwischen dem Vorformling (2) und der Anordnung aufweist, wobei der Durchmesser der Anordnung sich in Richtung der Behältermündung (6) in einer in Bezug auf den strömungsführenden Bereich (9) der Anordnung ersten konkaven Krümmung und in einer zweiten konvexen Krümmung verkleinert.

2. Anordnung (1) nach Anspruch 1, **dadurch gekennzeichnet, dass** der dichtende Abschluss (40, 20) zwischen dem Vorformling (2) und der Anordnung (1) zwischen der Anordnung (1) und der Mündung (6) des Vorformlings (2) oder zwischen der Anordnung (1) und der Außenseite des Vorformlings, vorzugsweise im unteren Mündungsbereich (6), oder zwischen der Anordnung (1) und der Form (3) erfolgt.

3. Anordnung (1) nach Anspruch 1 oder 2, **dadurch gekennzeichnet, dass** der Durchmesser der Anordnung (1) in der Richtung auf die Behältermündung (6) zwischen einem ersten zur Achse des Vorformlings im Wesentlichen parallelen Wandungsbereich (7a) und einem zweiten zur Achse (A) des Vorformlings parallelen Wandungsbereich (7b) stetig abnimmt,
der Übergang zwischen der Zuleitung (4) und der Anordnung tangential zu einer Wandung (7a) der Anordnung erfolgt und
der Übergang zwischen der Wandung (7b) der Anordnung und der Behältermündung (6) kantenfrei und achsparallel zur Achse (A) des Vorformlings (2) erfolgt.

4. Anordnung (1) nach Anspruch 1, **dadurch gekennzeichnet, dass** die Füllgutzuleitung (4) etwa rechtwinklig oder etwa parallel zur Achse (A) des Vorformlings (2) steht oder im Wesentlichen horizontal, im Wesentlichen vertikal oder leicht nach unten geneigt in die Anordnung (1) mündet.

5. Anordnung (1) nach Anspruch 1 oder 2, **dadurch gekennzeichnet, dass** die Querschnittsfläche (11) der Anordnung um die Achse (A) des Vorformlings (2) herum begrenzt ist, insbesondere kreisförmig.

6. Anordnung (1) nach einem der Ansprüche 1 bis 4, **dadurch gekennzeichnet, dass** die Wandung (7) der Anordnung kantenfrei ist.

7. Anordnung (1) nach einem der Ansprüche 1 bis 5, **dadurch gekennzeichnet, dass** die Tangente (T) der strömungsleitenden Wandung (7) an ihrem flachsten Abschnitt (7c) einen Winkel von unter 60° zur Achse (A) des Vorformlings (2) und insbesondere von unter 45° zur Achse (A) des Vorformlings (2) bildet.

8. Anordnung (1) nach einem der Ansprüche 1 bis 5, **dadurch gekennzeichnet, dass** die Krümmungsradien der Krümmungen der Wandungen (7) größer als die halbe Höhe (h) der Anordnung und/oder größer als ein Viertel ihrer Durchmesserreduzierung (Δ) sind.

9. Anordnung (1) nach einem der Ansprüche 1 bis 6, **dadurch gekennzeichnet, dass** die Wandung (7) der Anordnung durch eine stömungsleitende Spiralkontur (10) überlagert ist.

10. Anordnung (1) nach einem der Ansprüche 1 bis 7, **dadurch gekennzeichnet, dass** die Anordnung über eine Reckstange (5) mit strömungsleitenden Konturen (12), insbesondere mit einer Spiral- oder einer Wendelkontur, verfügt.

11. Anordnung (1) nach einem der Ansprüche 1 bis 10, **dadurch gekennzeichnet, dass** die Anordnung die Mündung (6) des Vorformlings (2) außenseitig umschließt.

12. Anordnung (1) nach einem der Ansprüche 1 bis 11, **dadurch gekennzeichnet, dass** die Anordnung die Mündung (6) des Vorformlings (2) von außen gegen radiale Kräfte abstützt.

13. Anordnung (1) nach einem der Ansprüche 1 bis 12, **dadurch gekennzeichnet, dass** die Anordnung mit der Behältermündung (6) verschraubbar ist.

14. Anordnung (1) nach einem der Ansprüche 1 bis 13, **dadurch gekennzeichnet, dass** die Anordnung mindestens zweiteilig aufgebaut ist, wobei ein Teil mit der Behältermündung (6) verbindbar ist und die Teile untereinander dichtend verbindbar sind, wobei insbesondere der nicht mit der Behältermündung verbindbare Teil der Anordnung fest mit einer Form- und Füllstation der Maschine verbunden sind.

## Claims

1. An arrangement (1) for feeding filling material into a container forming from a preform (2) in a mould (3) in a machine for simultaneously forming and filling containers from preforms, wherein, via its wall (7), the arrangement defines a flow path between a filling material supply line (4) and the container opening (6), **characterised in that** the arrangement has a sealing closure (40, 20) between the filling material supply line and the arrangement (1) as well as between the preform (2) and the arrangement, wherein the diameter of the arrangement decreases in the direction of the container opening (6) in a first concave curvature and in a second convex curvature in relation to the flow-guiding area (9) of the arrangement.

2. The arrangement (1) according to claim 1, **characterised in that** the sealing closure (40, 20) takes place between the preform (2) and the arrangement (1), between the arrangement (1) and the opening (6) of the preform (2) or between the arrangement (1) and the outer side of the preform, preferably in the lower opening area (6) or between the arrangement (1) and the mould (3).

3. The arrangement (1) according to claim 1 or 2, **characterised in that** the diameter of the arrangement (1) decreases steadily in the direction towards the container opening (6) between a first wall area (7a), which is essentially parallel to the axis of the preform, and a second wall area (7b), which is parallel to the axis (A) of the preform, the transition between the supply line (4) and the arrangement takes place tangentially to a wall (7a) of the arrangement, and
the transition between the wall (7b) of the arrangement and the container opening (6) takes place in an edge-free manner and axially parallel to the axis (A) of the preform (2).

4. The arrangement (1) according to claim 1, **characterised in that** the filing material supply line (4) is approximately at a right angle or approximately parallel to the axis (A) of the preform (2) or opens into the arrangement (1) essentially horizontally, essentially vertically or at a slight downward incline.

5. The arrangement (1) according to claim 1 or 2, **characterised in that** the cross-sectional surface (11) of the arrangement is limited around the axis (A) of the preform (2), in particular in a circular manner.

6. The arrangement (1) according to any one of claims 1 to 4, **characterised in that** the wall (7) of the arrangement is free from edges.

7. The arrangement (1) according to any one of claims 1 to 5, **characterised in that** at its flattest portion (7c), the tangent (T) of the flow-guiding wall (7) forms an angle of less than 60° to the axis (A) of the preform (2) and in particular of less than 45° to the axis (A) of the preform (2).

8. The arrangement (1) according to any one of claims 1 to 5, **characterised in that** the radii of curvature of the curvatures of the walls (7) are greater than half the height (h) of the arrangement and/or greater than one-fourth of its diameter reduction (Δ).

9. The arrangement (1) according to any one of claims 1 to 6, **characterised in that** the wall (7) of the arrangement is superposed by a flow-guiding spiral contour (10).

10. The arrangement (1) according to any one of claims 1 to 7, **characterised in that** the arrangement has a stretching rod (5) comprising flow-guiding contours (12), in particular comprising a spiral or a helical contour.

11. The arrangement (1) according to any one of claims 1 to 10, **characterised in that** the arrangement encloses the opening (6) of the preform (2) on the outer side.

12. The arrangement (1) according to any one of claims 1 to 11, **characterised in that** the arrangement supports the opening (6) of the preform (2) from the outside against radial forces.

13. The arrangement (1) according to any one of claims 1 to 12, **characterised in that** the arrangement can be screwed to the container opening (6).

14. The arrangement (1) according to any one of claims 1 to 13, **characterised in that** the arrangement is constructed of at least two parts, wherein one part can be connected to the container opening (6) and the parts can be connected to one another in a sealing manner, wherein in particular the part of the arrangement, which cannot be connected to the container opening, is firmly connected to a forming and filling station of the machine.

## Revendications

1. Agencement servant à acheminer un produit de remplissage dans un récipient formé à partir d'une préforme (2) dans un moule (3) d'une machine servant simultanément à former et à remplir des récipients à partir de préformes, l'agencement définissant par sa paroi (7) une voie d'écoulement entre une conduite d'amenée de produit de remplissage (4) et l'embouchure (6) du récipient, **caractérisé en ce que** l'agencement présente un raccord étanchéifiant (40, 20) entre la conduite d'amenée de produit de remplissage et l'agencement (1) ainsi qu'entre la préforme (2) et l'agencement, le diamètre de l'agencement allant, en direction de l'embouchure (6) du récipient, en diminuant dans une première incurvation concave par rapport à la zone d'écoulement (9) et dans une seconde incurvation convexe.

2. Agencement (1) selon la revendication 1, **caractérisé en ce que** le raccord étanchéifiant (40, 20) entre la préforme (2) et l'agencement (1) et entre l'agencement (1) et l'embouchure (6) de la préforme (2) ou entre l'agencement (1) et la paroi externe de la préforme est de préférence réalisé dans la section d'embouchure (6) inférieure ou entre l'agencement (1) et le moule (3).

3. Agencement (1) selon la revendication 1 ou 2, **caractérisé en ce que** le diamètre de l'agencement (1) diminue, en direction de l'embouchure (6) du récipient, continuellement entre une première section de paroi (7a) essentiellement parallèle par rapport à l'axe de la préforme et une seconde section de paroi (7b) parallèle par rapport à l'axe de la préforme,
la transition entre la conduite d'amenée (4) et l'agencement est tangentielle par rapport à une paroi (7a) de l'agencement, et **en ce que**
la transition entre la paroi (7b) de l'agencement et l'embouchure (6) du récipient ne présente pas d'arêtes et est parallèle à l'axe (A) de la préforme (2).

4. Agencement (1) selon la revendication 1, **caractérisé en ce que** la conduite d'amenée (4) de produit de remplissage débouche dans l'agencement (1) de façon approximativement perpendiculaire ou approximativement parallèle à l'axe (A) de la préforme (2), ou essentiellement horizontale, essentiellement verticale ou légèrement inclinée vers le bas.

5. Agencement (1) selon la revendication 1 ou 2, **caractérisé en ce que** la surface de section (11) de l'agencement autour de l'axe (A) de la préforme (2) est délimitée, notamment en forme de cercle.

6. Agencement (1) selon l'une des revendications 1 à 4, **caractérisé en ce que** la paroi (7) de l'agencement ne présente pas d'arêtes.

7. Agencement (1) selon l'une des revendications 1 à 5, **caractérisé en ce que** la tangente (T) de la section la plus plate (7c) de la paroi (7) d'écoulement forme un angle de moins de 60° par rapport à l'axe (A) de la préforme (2), et notamment inférieur à 45° par rapport à l'axe (A) de la préforme (2).

8. Agencement (1) selon l'une des revendications 1 à 5, **caractérisé en ce que** le rayons de courbure des parois (7) sont supérieurs à la demi-hauteur (h) de l'agencement et/ou supérieurs à un quart de sa réduction de diamètre (A).

9. Agencement (1) selon l'une des revendications 1 à 6, **caractérisé en ce qu'**un contour en spirale (10) conducteur de l'écoulement est superposé à la paroi (7) de l'agencement.

10. Agencement (1) selon l'une des revendications 1 à 7, **caractérisé en ce que** l'agencement est muni d'une barre d'étirage (5) présentant des contours (12) conducteurs de l'écoulement, notamment un contour en forme de spirale ou d'hélice.

11. Agencement (1) selon l'une des revendications 1 à 10, **caractérisé en ce que** l'agencement entoure l'extérieur de l'embouchure (6) de la préforme (2).

12. Agencement (1) selon l'une des revendications 1 à 11, **caractérisé en ce que** l'agencement fait écran à des forces radiale s'exerçant sur l'extérieur de l'embouchure (6) de la préforme (2).

13. Agencement (1) selon l'une des revendications 1 à 12, **caractérisé en ce que** L'agencement peut être vissé sur l'embouchure (6) du récipient.

14. Agencement (1) selon l'une des revendications 1 à 13, **caractérisé en ce que** l'agencement est constitué d'au moins deux parties, une partie pouvant être raccordée à l'embouchure du récipient et les parties pouvant être raccordées l'une à l'autre de façon étanche, la partie de l'agencement non raccordée à l'embouchure (6) du récipient étant notamment reliée de manière fixe à une station de moulage et de remplissage de la machine.
